# EUROPÄISCHE PATENTSCHRIFT

(11) **EP 1 957 946 B1**
(45) Veröffentlichungstag und Bekanntmachung des Hinweises auf die Patenterteilung: **19.06.2019**
(21) Anmeldenummer: 06819846.4
(22) Anmeldetag: 29.11.2006
(51) Int. Cl.: G01F 1/84

(54) **MESSAUFNEHMER VOM VIBRATIONSTYP**
MEASURING SENSOR OF THE VIBRATION TYPE
CAPTEUR DE TYPE VIBRATOIRE

(30) Priorität: 08.12.2005 DE 102005059070
(43) Veröffentlichungstag der Anmeldung: 20.08.2008
(73) Patentinhaber: Endress+Hauser Flowtec AG, 4153 Reinach (CH)
(72) Erfinder: BITTO, Ennio, 4147 Aesch (CH); ECKERT, Gerhard, 79618 Rheinfelden (DE); LOPATIN, Sergej, 79540 Lörrach (DE); MATT, Christian, 4147 Aesch (CH); PFEIFFER, Helmut, 79585 Steinen (DE); RIEDER, Alfred, 84032 Landshut (DE); ANKLIN-IMHOF, Martin, 4143 Dornach (CH); STUCKI, Martin, 4133 Pratteln (CH)
(74) Vertreter: Andres, Angelika Maria
(86) Internationale Anmeldenummer: PCT/EP2006/069078
(87) Internationale Veröffentlichungsnummer: WO 2007/065832

(56) Entgegenhaltungen:
- EP-A- 0 462 711
- EP-A1- 1 253 409
- DE-A1- 3 503 841
- FR-A1- 2 449 872
- JP-A- 11 108 724
- US-A1- 5 054 322
- US-A1- 5 796 011

## Beschreibung

Die Erfindung betrifft einen Meßaufnehmer vom Vibrationstyp zum Messen eines in einer Rohrleitung geführten strömungsfähigen Mediums, insb. eines Gases, einer Flüssigkeit, eines Pulvers oder eines anderen strömungsfähigen Stoffes.

In der Prozeßmeß- und Automatisierungstechnik werden für die Messung physikalischer Parameter, wie z.B. dem Massedurchfluß, der Dichte und/oder der Viskosität, eines in einer Rohrleitung strömenden Mediums oftmals solche In-Line-Meßgeräte verwendet, die mittels eines vom Medium durchströmten Meßaufnehmers vom Vibrationstyp und einer daran angeschlossenen Meßgerät-Elektronik, im Medium Reaktionskräfte, wie z.B. mit dem Massedurchfluß korrespondierende Corioliskräfte, mit der Dichte des Mediums korrespondierende Trägheitskräfte und/oder mit der Viskosität des Mediums korrespondierende Reibungskräfte etc., bewirken und von diesen abgeleitet ein den jeweiligen Massedurchfluß, die jeweilige Viskosität und/oder ein die jeweilige Dichte des Mediums repräsentierendes Meßsignai erzeugen.

Zumeist ist die Meßgerät-Elektronik ferner so ausgelegt, daß im Betrieb das In-Line-Meßgerät mit einer diesem übergeordneten Meßwertverarbeitungseinheit, beispielsweise einer speicherprogrammierbaren Steuerung (SPS), einem Personalcomputer und/oder einer Workstation, via Datenübertragungssystem Meß- und/oder andere Betriebsdaten austauschen kann. Des weiteren ist die Meßgerät-Elektronik so ausgelegt, daß sie von einer externen Energieversorgung gespeist werden kann. Daher weist die Meßgerät-Elektronik zu dem eine entsprechende Kommunikations-Schnittstelle, z.B. zum Senden der Meßdaten an die bereits erwähnte speicherprogrammierbare Steuerung oder ein übergeordnetes Prozeßleitsystem, auf. Als Übertragungssysteme dienen üblicherweise Feldbussysteme, beispielsweise Profibus- oder Foundation Fieidbus-Systeme etc., mit denen sowohl die Energieversorgung als auch die Datenkommunikation realisiert werden kann.

Meßaufnehmer der beschriebenen Art, insb. solche die als Coriolis-Massedurchflußmesser oder Coriolis-Massedurchfluß-/ Dichtemesser ausgebildet sind, sind z.B. in der DE-A 35 03 841, der EP-A 462 711, der JP-A 11 108 724, der US-A 50 54 322, der US-A 42 52 028, der WO-A 05/111550, der WO-A 04/083785, der WO-A 04/038341, WO-A 03/076879, der WO-A 03/027616, der WO-A 03/021202, WO-A 02/088641, der WO-A 01/33174, der WO-A 00/57141, der WO-A 98/ 07 009, der US-B 67 11 958, der US-B 66 66 098, der US-B 65 26 829, der US-B 64 12 354, der US-B 63 08 580, der US-B 63 01 973, der US-A 60 92 429, der US-A 59 18 285, der US-A 57 96 011, der US-A 53 70 002, US-A 53 01 557, der US-A 52 26 330, der US-A 50 24 104, der US-A 48 76 898, der EP A 553 939, der EP-A 1 001 254, der EP-A 1 448 956 oder der EP-A 1 421 349 ausführlich und detailliert beschrieben. Zum Führen des zumindest zeitweise strömenden Mediums umfassen die Meßaufnehmer jeweils mindestens ein an einem zumeist eher dickwandigen, insb. rohrförmigen und/oder balkenartigen, Tragzylinder oder in einem Tragrahmen entsprechend schwingfähig gehaltertes Aufnehmer-Rohr, das zum Erzeugen oben genannter Reaktionskräfte, angetrieben von einer elektro-mechanischen Erregeranordnung, im Betrieb vibrieren gelassen wird. Zum Erfassen, insb. einlaßseitiger und auslaßseitiger, Vibrationen des Aufnehmer-Rohrs und zum Erzeugen wenigstens eines diese repräsentierenden Schwingungsmeßsignals weisen solche Meßaufnehmer ferner jeweils eine auf Bewegungen und insoweit auch auf mechanische Schwingungen des Aufnehmer-Rohrs reagierende Sensoranordnung auf. Die Erregeranordnung kann, wie u.a. in den vorbezeichneten JP-A 11 108 724, US-A 42 52 028, US-A 57 96 011 bzw. WO-A 02/088641 der gezeigt, jeweils mittels einer oder mehren Spulen gebildet sein. Die Sensoranordnung kann, wie u.a. in den vorbezeichneten DE-A 35 03 841, EP-A 462 711 bzw. US-A 50 54 322, gezeigt, mittels eines oder mehrere Wandlerelemente gebildet sein, von denen jedes wenigstens einen zumindest anteilig aus piezoelektrischem Material bestehenden Verformungskörper aufweist.

Im Betrieb wird das vorbeschriebene, durch das wenigstens eine Aufnehmer-Rohr, das zumindest darin momentan geführte Medium sowie zumindest anteilig durch die Erreger- und die Sensoranordnung gebildete innere Schwingungssystems des Meßaufnehmers mittels der elektro-mechanischen Erregeranordnung zumindest zeitweise in einem Nutzschwingungsmode zu mechanischen Schwingungen auf wenigstens einer dominierenden Nutz-Schwingungsfrequenz angeregt. Diese Schwingungen im sogenannten Nutzmode sind zumeist, insb. bei Verwendung des Meßaufnehmers als Coriolis-Massedurchfluß- und/oder Dichtemesser, zumindest anteilig als Lateral-Schwingungen ausgebildet. Als Nutz-Schwingungsfrequenz wird dabei üblicherweise eine natürliche momentane Resonanzfrequenz des inneren Schwingungssystems gewählt, die wiederum sowohl von Größe, Form und Material des Aufnehmer-Rohrs als auch von einer momentanen Dichte des Mediums abhängig ist; ggf. kann die Nutz-Schwingungsfrequenz auch von einer momentanen Viskosität des Mediums signifikant beeinflußt sein. Infolge schwankender Dichte des zu messenden Mediums und/oder infolge von im Betrieb vorgenommen Mediumswechseln ist die Nutz-Schwingungsfrequenz im Betrieb des Meßaufnehmers naturgemäß zumindest innerhalb eines kalibrierten und insoweit vorgegebenen Nutz-Frequenzbandes veränderlich, das entsprechend eine vorgegebene untere und eine vorgegebene obere Grenzfrequenz aufweist. Das von dem wenigstens einen Aufnehmer-Rohr sowie der Erreger- und der Sensoranordnung gemeinsam gebildete innere Schwingungssystem des Meßaufnehmers ist ferner üblicherweise von einem den Tragrahmen bzw. den Tragzylinder als integralen Bestandteil aufweisenden Aufnehmer-Gehäuse eingehaust. Für Meßaufnehmer vom Vibrationstyp entsprechend geeignete Aufnehmer-Gehäuse sind beispielsweise in der WO-A 03/076879, der WO-A 03/021202, der WO-A 01/65213, der WO-A 00/57141, der US-B 67 76 052, der US-B 67 11 958, der US-A 60 44 715, der US-A 53 01 557 oder der EP-A1 001 254 beschrieben.

Schwingungserreger und Schwingungssensoren bilden Komponenten des Meßwandlers, denen sowohl hinsichtlich ihrer mechanischen als auch ihrer elektrischen Störfestigkeit eine für die Meßgenauigkeit entscheidende Bedeutung beizumessen ist. Dies um so mehr, als Erreger- und Sensoranordnung, bedingt durch das Wirkungsprinzip von Meßaufnehmern der beschriebenen Art, den Schwingungen der Aufnehmer-Rohre zumeist direkt ausgesetzt sind. Infolgedessen unterliegen sie nicht nur erhöhten mechanischen Belastungen, sondern sind, aufgrund der Bewegung von elektrischen Strom führenden Leitungen, zumeist auch erheblichen elektrischen Störeinflüssen ausgesetzt. Darüber hinaus können, wie beispielsweise in der US-A 48 76 898 oder der WO-A 04/083785 diskutiert, hohe und/oder stark schwankende Betriebstemperaturen einen erheblichen Einfluß auf die Meßgenauigkeit, insb. aber auch auf die mechanische Integrität von Erreger- und/oder Sensoranordnung, haben.

Ausgehend vom oben genannten Stand der Technik besteht daher eine Aufgabe der Erfindung darin, den Aufbau der Erregeranordnung von Meßaufnehmer der beschriebenen Art dahingehend zu verbessern, daß sie jeweils einen vergleichsweise einfachen mechanisch robusten Aufbau aufweist und gleichermaßen weitgehend störfest ist.

Diese Aufgabe wird durch eine Vorrichtung mit den in Anspruch 1 angegebenen Merkmalen gelöst. Bevorzugte Ausführungsformen ergeben sich aus den Unteransprüchen.

Ein Grundgedanke der Erfindung besteht darin, die meßprinzipbedingt erforderliche Wandlung von elektrischer Energie in mechanische Schwingungsenergie bzw. von mechanischer Schwingungsenergie in elektrische Energie dadurch erfolgt, daß anstelle einer direkten unmittelbaren Übertragung zwischen den schwingenden Aufnehmer-Rohren und der Erregeranordnung und/oder der Sensoranordnung eine eher indirekte Übertragung über endseitigen Koppelelemente genutzt wird. Untersuchungen haben hierbei gezeigt, daß die betriebsgemäß erzwungenen Verformungen im Vergleich zu denen der Aufnehmer-Rohren zwar eher gering ausfallen, jedoch, insb. bei Verwendung piezo-elektrischer oder piezo-resitiver Verformungskörper zur Energiewandlung, durchaus zumeist so ausgebildet sind, daß eine sehr effektive und wirkungsvoll Erregung und/oder Detektion von mechanischen Schwingungen der Aufnehmer-Rohre realisieren werden kann.

Ein Vorteil der Erfindung besteht u.a. darin, daß abgesehen von den ohnehin erforderlichen Knotenplatten keine weiteren Komponenten direkt an den betriebsgemäß vibrierenden Aufnehmer-Rchren fixiert werden müssen. Zumindest kann auf die übliche, zumeist sehr aufwendige Montage der Schwingungserreger bzw. -sensoren an den Aufnehmer-Rchren durchaus verzichtet werden. Anders gesagt, kann der Meßaufnehmer so ausgebildet werden, daß die zwischen den beiden innersten zumeist als Knotenplatten ausgebildeten Koppelelementen verlaufende und insoweit das wenigstens eine Meßrohr eigentlich definierende freischwingende Länge der beiden Aufnehmer-Rohre frei von zusätzlichen Anbauteilen, insb. frei von herkömmlichen Schwingungserregern und/oder -sensoren, gehalten werden. Des weiteren können die Aufnehmer-Rohre infolge der endseitigen und überdies eher indirekten Schwingungserregung bzw. -detektion so ausgelegt werden, daß sie praktisch über die gesamte frei schwingende Länge eine im wesentlichen homogene Massenverteilung aufweisen. Infolgedessen sind die Schwingungen der Aufnehmer-Rohre weit ungestörter als bei herkömmlichen Meßaufnehmern, bei denen die Sensor- und/oder Erregeranordnung direkten in die Schwingungsform der vibrierenden Aufnehmer-Rohre eingreifen. Darüber hinaus sind die so realisierten Sensor- und/oder Erregeranordnungen aufgrund ihrer vergleichsweise einfachen Konstruktion und auch entsprechend kostengünstig zu fertigen und zu montieren. Zudem können die Wandlerelemente besonders bei der Verwendung piezo-elektrischer oder piezo-resitiver Verformungskörper zur Energiewandlung mechanisch sehr stabil und robust ausgebildet werden.

Ferner können somit auch die die Erreger- und/oder die Sensoranordnung mit der Meßgerät-Elektronik elektrisch verbindenden Leitungen ggf. auch ohne zusätzliche Hilfskonstruktionen so verlegt werden, daß sie an relativ zur zwischen Erreger- und/ oder Sensoranordnung im wesentlichen ruhenden Komponenten des Meßwandler fixiert werden können.

Die Erfindung wird nun anhand von Ausführungsbeispielen sowie den Figuren der Zeichnung näher erläutert. Funktionsgleiche Teile sind in den einzelnen Figuren mit denselben Bezugszeichen versehen, die jedoch in nachfolgenden Figuren nur dann wiederholt sind, wenn es zweckmäßig erscheint.
Fig. 1a, b zeigen ein, beispielsweise als Coriolis-Durchfluss/Dichte/Viskositäts-Aufnehmer dienendes In-Line-Meßgerät mit einem Meßaufnehmer vom Vibrationstyp in verschieden Seitenansichten;
Fign. 2 bis 4 zeigen Einzelheiten eines für ein In-Line-Meßgerät nach Fig. 1a, b geeigneten, zwei Aufnehmer-Rohre aufweisenden Meßaufnehmers vom Vibrationstyp in verschiedenen, teilweise geschnitten Seitenansichten;
Fign. 5a - c zeigen Schwingungsbewegungen von Aufnehmer-Rchren gemäß den Fign. 2 bis 4 sowie mit den Schwingungsbewegungen einhergehende Verformungen eines die Aufnehmer-Rohre miteinander mechanisch verbindenden Koppelelements;
Fig. 6a - f zeigen verschiedene Ausführungsbeispiele für ein dem Erregen und/oder Erfassen von mechanischen Schwingungen von Aufnehmer-Rohre eines Meßwandlers vom Vibrationstyp dienendes elektro-mechanisches Wandlerelement mit zumindest anteilig aus piezo-elektrischem Material bestehenden Verformungskörpern;
Fig. 7a, b zeigen Ausgestaltungen des Aufbaus eines für die Verwendung in einem Wandlerelement gemäß einer der Fig. 6a-f geeigneten Verformungskörpern mit jeweils zwei unterschiedlich polarisierten piezo-elektrischen Segmenten;
Fig. 8a, b beispielhaft das Erzeugen einer Kippbewegung mit einem mittels zweier gestapelter piezo-elektrischer Verformungskörpern gebildeten Wandlerelements;
Fig. 9a, b zeigen eine Anordnung zweier übereinander gestapelter piezo-elektrischer Verformungskörper gemäß Fig. 8a mit jeweils zwei unterschiedlich polarisierten Segmenten;
Fig. 10 zeigt verschiedene Kräfte-Signal-Konstellationen auf, wie sie bei einem piezo-elektrischen Verformungskörper gemäß Fig. 8a oder 8b auftreten können;
Fig. 11 zeigt einen Aufbau eines piezo-elektrischen Verformungskörpers mit vier paarweise verschieden polarisierten Segmenten und mit einer Zentralbchrung;
Fig. 12 zeigt eine Anordnungsmöglichkeit zweier piezo-elektrischer Verformungskörper gemäß Fig.11 zu einem Stapel; und
Fig. 13 zeigt ein Wandlerelement mit einem Verformungskörper gemäß Fig. 12.

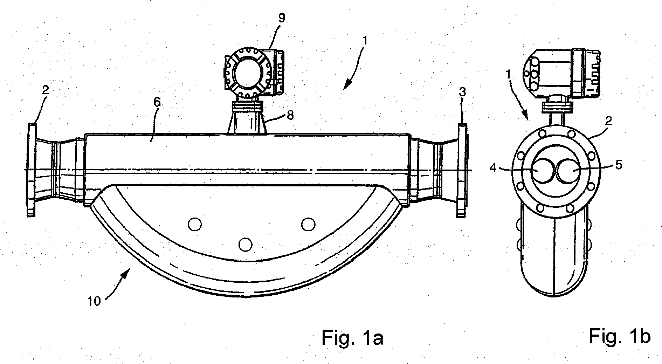

In den Fig. 1a, b ist ein, insb. als Coriolis-Massedurchfluß- und/oder Dichte-Meßgerät ausgebildetes, In-Line-Meßgerät 1 dargestellt, das dazu dient, einen Massendurchfluß m eines in einer - hier aus Übersichtlichkeitsgründen nicht dargestellten - Rohrleitung strömenden Mediums zu erfassen und in einen diesen Massendurchfluß momentan repräsentierenden Massendurchfluß-Meßwert Xₘ abzubilden. Medium kann praktisch jeder strömungsfähige Stoff sein, beispielsweise ein Pulver, eine Flüssigkeit, ein Gas, ein Dampf oder dergleichen. Alternativ oder in Ergänzung kann das In-Line-Meßgerät 1 ggf. auch dazu verwendet werden eine Dichte r und/oder eine Viskosität h des Mediums zu messen. Das In-Line-Meßgerät 1 umfaßt dafür einen im Betrieb vom zu messenden Medium durchströmten Meßaufnehmer 10 vom Vibrationstyp sowie eine mit dem Meßaufnehmer 10 elektrisch verbundene - hier nicht im einzelnen, sondern lediglich als schematisch als Schaltungsblock dargestellte - Meßgerät-Elektronik 20. In vorteilhafter Weise ist die Meßgerät-Elektronik 20 so ausgelegt, daß sie im Betrieb des In-Line-Meßgerät 1 mit einer diesem übergeordneten Meßwertverarbeitungseinheit, beispielsweise einer speicherprogrammierbaren Steuerung (SPS), einem Personalcomputer und/oder einer Workstation, via Datenübertragungssystem, beispielsweise einem Feldbussystem, Meß- und/oder andere Betriebsdaten austauschen kann. Des weiteren ist die Meßgerät-Elektronik so ausgelegt, daß sie von einer externen Energieversorgung, beispielsweise auch über das vorgenannte Feldbussystem, gespeist werden kann. Für den Fall, daß das In-line-Meßgerät für eine Ankopplung an ein Feldbus- oder ein anderes Kommunikationssystem vorgesehen ist, weist die, insb. programmierbare, Meßgerät-Elektronik 20 zu dem eine entsprechende Kommunikations-Schnittstelle für eine Datenkommunikation auf, z.B. zum Senden der Meßdaten an die bereits erwähnte speicherprogrammierbare Steuerung oder ein übergeordnetes Prozeßleitsystem, auf.

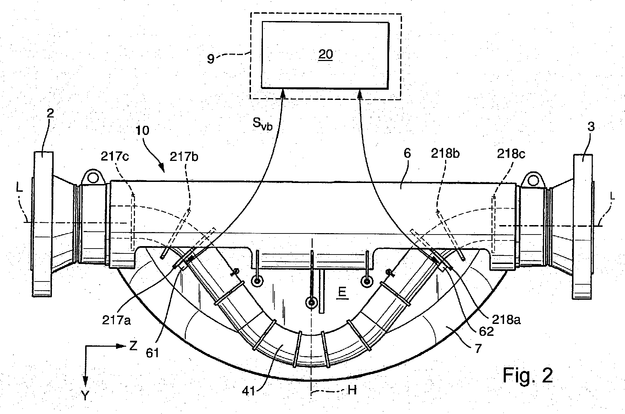

In den Fig. 2 bis 4 ist in unterschiedlichen Darstellungsarten ein Ausführungsbeispiel für einen, insb. als Coriolis-Massedurchfluss-, als Dichte- und/ oder als Viskositäts-Aufnehmer dienenden, Meßaufnehmer 1 vom Vibrationstyp gezeigt. Wie bereits erwähnt, dient der Meßaufnehmer 1 im besonderen dazu, in einem hindurchströmenden Medium solche mechanische Reaktionskräfte, insb. vom Massendurchfluß abhängige Corioliskräfte, von der Mediumsdichte abhängige Trägheitskräfte und/oder von der Mediumsviskosität abhängige Reibungskräfte, zu erzeugen, die meßbar, insb. sensorisch erfaßbar, auf den Meßaufnehmer zurückwirken. Abgeleitet von diesen das Medium beschreibenden Reaktionskräften können mittels in der Meßgerät-Elektronik entsprechend implementierten Auswerte-Verfahren in der dem Fachmann bekannten Weise z.B. der Massendurchfluß, die Dichte und/oder die Viskosität des Mediums gemessen werden. Der Meßaufnehmer 1 ist im Betrieb in den Verlauf einer von einem zu messenden, insb. pulvrigen, flüssigen, gasförmigen oder dampfförmigen, Medium durchströmten - aus Gründen der Übersichtlichkeit jedoch nicht dargestellten - Rohrleitung über Flansche 2, 3, einzusetzen. Anstatt mittels Flanschen kann der Meßaufnehmer 1 an die erwähnte Rohrleitung auch durch andere bekannte Mittel angeschlossen werden, wie z.B. mittels Triclamp-Anschlüssen oder Schraubverbindungen.

Zum Führen wenigstens eines Teilvolumens des zu messenden Mediums umfaßt der Meßaufnehmer wenigstens ein als Meßrohr dienendes, im Betrieb mit der Rohrleitung kommunizierendes erstes Aufnehmer-Rohr 4, das in einem Aufnehmer-Gehäuse 10 des Meßaufnehmers 1 schwingfähig gehaltert ist, und das im Betrieb in einem für die Ermittlung der physikalischen Meßgröße geeigneten Schwingungsmode zumindest zeitweise vibrieren gelassen wird. Ferner weist der Meßaufnehmer 1 ein um Aufnehmer-Rohr 4 im wesentlichen parallel verlaufendes, im Betrieb ebenfalls zumindest zeitweise vibrierendes zweites Aufnehmer-Rohr 5 auf, das in unmittelbarer Nachbarschaft zum ersten Aufnehmer-Rohr angeordnet und ebenfalls im Aufnehmer-Gehäuse 1 untergebracht ist. Im hier gezeigten Ausführungsbeispiel weist jedes der beiden Aufnehmer-Rohre 4, 5 jeweils ein zumindest abschnittsweise gebogenes Rohrsegment 41 bzw. 51 auf. Die Aufnehmer-Rohre 4, 5 können beispielsweise, wie auch in der US-B 67 76 052 gezeigt, Rohrsegmente mit einer ausgeprägten U-Form aufweisen oder, wie auch in der US-B 68 02 224 oder der US-B 67 11 958 vorgeschlagen und in den Fig. 2 - 4 gezeigt, im wesentlichen V-förmig ausgebildet sein. Des weiteren können die Aufnehmer-Rohre aber auch, wie z.B. in der US-A 57 96 011 beschrieben, nur sehr geringfügig oder, wie z.B. in der WO-A 01/65213, der US-B 63 08 580, der US-A 53 01 557, der US-A 60 92 429, der US-A 60 44 715 gezeigt, eher rechteck- oder trapezartig ausgebogen oder ggf. auch im wesentlichen gerade sein. Als Material für das Aufnehmer-Rohr eignen sich je nach gewählter Rohrform im besonderen Stahl, insb. Edelstahl, Titan, Zirkonium oder Tantal. Darüber hinaus kann als Material für die Aufnehmer-Rohre aber auch praktisch jeder andere dafür üblicherweise verwendete oder zumindest geeignete Werkstoff dienen.

Es besteht nunmehr die Möglichkeit, neben dem ersten Aufnehmer-Rohr 4 auch das zweite Aufnehmer-Rohr 5 als von zu messendem Medium durchströmtes Meßrohr auszuführen. Alternativ dazu ist es aber auch möglich, wie beispielsweise auch in der US-B 66 66 098 oder der US-A 55 49 009 vorgeschlagen, lediglich eines der beiden Aufnehmer-Rohre als dem Führen von Medium dienendes Meßrohr und das andere als vom zu messenden Medium nicht durchströmtes, der Verringerung von intrinsischen Imbalancen im Meßaufnehmer dienendes Blindrohr zu verwenden. Für den Fall, daß beide Aufnehmer-Rohre 4, 5 jeweils als Meßrohr dienen sollen und somit auch das zweite Aufnehmer-Rohr 5, wie auch aus der Zusammenschau der Fign. 1b, 3 und 4 ersichtlich, dafür vorgesehen ist, ein Teilvolumen vom zu messenden Medium zu führen, können die Aufnehmer-Rohre 4, 5, wie in den Fign. 1b, 3 und 4 angedeutet und beispielsweise auch in der US-B 67 11 958, der US-A 57 96 011, der US-A 53 01 557 gezeigt, mittels eines einlaßseitigen ersten Verteilerstücks 11 sowie eines auslaßseitigen zweiten Verteilerstücks 12 miteinander zu im Betrieb parallel durchströmten Strömungspfaden verbunden sein; sie können aber auch, wie z.B. in der US-A 60 44 715 gezeigt, unter Bildung hintereinander liegender Strömungspfade seriell miteinander verbunden sein. Des weiteren sind die Aufnehmer-Rohre 4, 5, zumindest für den Fall, daß beide als Meßrohr dienen sollen, im wesentlichen identisch ausgebildet.

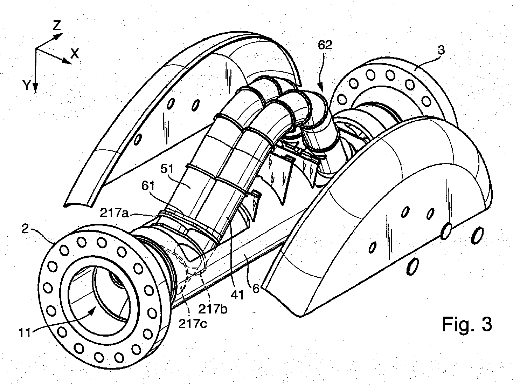

Die beiden Aufnehmer-Rohre 4, 5 sind, wie aus der Zusammenschau der Fign. 1a, b und 3 ohne weiteres ersichtlich und wie bei derartigen Meßaufnehmern auch üblich, vom Aufnehmer-Gehäuse 10 praktisch vollständig umhüllt. Das Aufnehmer-Gehäuse 10 dient insoweit also nicht nur als Halterung der Aufnehmer-Rohre 4, 5 sondern darüber hinaus auch dazu, die innen liegenden Bauteile des Meßaufnehmers 1, wie beispielsweise die Erreger- und die Sensoranordnung und allfällig darüber hinaus innerhalb des Aufnehmer-Gehäuse plazierte Komponenten des Meßaufnehmers, vor äußeren Umwelteinflüssen, wie z.B. Staub oder Spritzwasser, zu schützen. Überdies kann das Aufnehmer-Gehäuse 10 ferner auch so ausgeführt und so bemessen sein, daß es bei allfälligen Schäden am Aufnehmer-Rohr 4, z.B. durch Rißbildung oder Bersten, ausströmendes Medium bis zu einem geforderten maximalen Überdruck im Inneren des Aufnehmer-Gehäuses möglichst vollständig zurückzuhalten kann. Als Material für das Aufnehmer-Gehäuse, insb. auch die Gehäusekappe 7, können z.B. Stähle wie Baustahl oder rostfreier Stahl, oder auch andere geeignete hochfeste Werkstoffe verwendet werden. Nach einer weiteren Ausgestaltung des Meßaufnehmers bestehen das wenigstens eine, insb. zumindest abschnittsweise gebogene, Aufnehmer-Rohr 4 und das Aufnehmer-Gehäuse aus jeweils dem gleichen Material, insb. Stahl oder Edelstahl, oder zumindest aus einander ähnlichen Materialien, insb. verschiedenen Stahlsorten. Ferner kann es von Vorteil sein, die Flansche, wie auch in Fig. 1a, b dargestellt und wie bei derartigen Meßaufnehmer durchaus üblich, als integralen Bestandteil des Aufnehmer-Gehäuses auszubilden, um so eine möglichst kurze Einbaulänge bei möglichst hoher Stabilität des Meßaufnehmers zu erreichen; gleichermaßen können auch die ggf. vorgesehenen Verteilerstücke 11, 12 direkt in das Aufnehmer-Gehäuse integriert sein. Im hier gezeigten Ausführungsbeispiel ist das Aufnehmer-Gehäuse 10 mittels eines - hier als seitlich zumindest teilweise offener Tragzylinder dargestellten - Tragelements 6 gebildet, das wesentlicher starrer als die Aufnehmerohre 4, 5 ausgebildet ist, und das, wie in Fig. 2, 3 und 4 dargestellt, mit den Aufnehmer-Rohren 4, 5 einlaßseitig und auslaßseitig mechanisch so verbunden ist, daß das wenigstens eine gebogene - hier eher V-förmige - Rohrsegment eines jeden Aufnehmer-Rohren 4, 5 seitlich herausragt.

Ferner weist das Aufnehmer-Gehäuse eine zumindest vom gebogenen Rohrsegment des Aufnehmer-Rohrs 4 beabstandet angeordnete und am Tragelement 6, insb. dauerhaft und/oder mediumsdicht, fixierte Gehäusekappe 7 zum Einhausen zumindest des wenigstens einen gebogenen Rohrsegments des wenigstens einen Aufnehmer-Rohrs 4. Beim gezeigten Ausführungsbeispiel sind die Aufnehmer-Rohre 4, 5 im hier rohrförmigen Tragelement 6 einlaß- und auslaßseitig so gehaltert, daß das schwingfähige Rohrsegment 41, durch zwei Ausnehmungen 61, 62 des Tragelements 6 verlaufend, seitwärts aus diesem heraus- und somit in die ebenfalls am Tragelement 6 fixierte Gehäusekappe 7 hineinragt. Es sei hierbei noch erwähnt, das anstelle des hier eher rohrförmig dargestellten Tragelements 6 auch ein ggf. massiver Tragzylinder mit einem anderen geeigneten Querschnitt verwendet werden kann, beispielsweise auch ein eher balkenförmig ausgebildetes Tragelement.

Neben dem Aufnehmer-Gehäuse 10 und den darin gehalterten Aufnehmer-Rohren 4, 5 umfaßt der Meßaufnehmer 1 des weiteren auf die Aufnehmer-Rohre 4, 5 elektromechanisch einwirkende sowie auf mechanische Schwingungen der Aufnehmer-Rohre 4, 5 reagierende Mittel 61, 62 zum Erzeugen und/oder Aufrechterhalten von mechanischen Schwingungen der Aufnehmer-Rohre 4, 5 bzw. zum Erzeugen wenigstens eines Schwingungen der Aufnehmer-Rohre 4, 5 repräsentierenden Schwingungsmeßsignals s_{vb}. Gemäß einer Ausgestaltung der Erfindung werden die beiden - hier zumindest abschnittsweise zueinander parallel verlaufenden - Aufnehmer-Rohre 4, 5 zu auslegerartigen Vibrationen, insb. auf einer jeweiligen momentanen mechanischen Resonanzfrequenz, angeregt, bei denen sie aus der oben erwähnten Ebene lateral ausgelenkt und nach Art einer Stimmgabel zueinander im wesentlichen gegenphasig schwingen gelassen werden. Anders gesagt, die Rohrsegmente 41, 51 schwingen in einem Biegeschwingungsmode nach der Art eines einseitig eingespannten Auslegers. Die Mittel 61, 62 zum Erzeugen und/oder Erfassen von Schwingungen sind ferner, wie bei derartigen Meßaufnehmern üblich, in geeigneter Weise mit einer in der Meßgerät-Elektronik 20 entsprechend vorgesehenen der Meß- und Betriebsschaltung elektrisch gekoppelt. Die Meß- und Betriebsschaltung wiederum erzeugt einerseits ein die Erregeranordnung 60 entsprechend treibendes, beispielsweise hinsichtlich eines Erregerstromes und/oder einer Erregerspannung geregeltes, Erregersignal s_{xc}. Andererseits empfängt die Meß- und Betriebsschaltung das wenigstens eine Schwingungsmeßsignal s_{vb} der Sensoranordnung 70 und generiert daraus gewünschte Meßwerte, die beispielsweise einen Massedurchfluß, eine Dichte und/oder eine Viskosität des zu messenden Mediums repräsentieren können und die ggf. vor Ort angezeigt oder auch ggf. übergeordnet weiterverarbeitet werden.

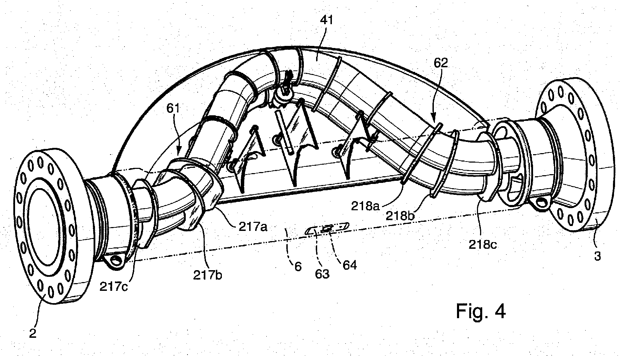

Die Meßgerät-Elektronik 20 einschließlich der Meß- und Betriebsschaltung kann beispielsweise in einem separaten Elektronik-Gehäuse 9 untergebracht sein, das vom Meßaufnehmer entfernt angeordnet oder, unter Bildung eines einzigen Kompaktgeräts, direkt am Meßaufnehmer 1, beispielsweise von außen am Aufnehmer-Gehäuse 10 fixiert ist. Zum Haltern des Elektronik-Gehäuses 9 kann beispielsweise, wie auch in Fig. la, b gezeigt, am Aufnehmer-Gehäuse 10 ferner ein halsartiges Übergangsstücks 8 angebracht sein. In den Fig. 2 bis 4 ist das Übergangsstück 8 allerdings weggelassen; lediglich in Fig. 4 ist eine in eine Wand des Aufnehmer-Gehäuses 10 eingelassene Ansatzfläche 63 für das Übergangsstück 8 zu sehen. In der Ansatzfläche 63 ist eine elektrische Durchführung 64 angeordnet, mittels der elektrische Verbindungen zur Erregeranordnung 60 und zur Sensoranordnung 70 sowie gegebenenfalls weiteren elektrischen Komponenten, wie z.B. im Meßaufnehmer 1 ggf. vorgesehenen Druck- und/oder Temperatursensoren, herstellbar sind.

Die beiden Aufnehmer-Rohre 4, 5 sind, wie in den Fig. 2 bis 4 dargestellt und wie bei derartigen Meßaufnehmern durchaus üblich, mittels wenigstens eines daran fixierten ersten einlaßseitigen Koppelelements 217a und mittels wenigstens eines daran fixierten ersten auslaßseitigen Koppelelement 218a miteinander mechanisch gekoppelt. Der exemplarisch gezeigte Meßaufnehmer weist darüber hinaus noch ein zweites und drittes einlaßseitiges Koppelelement 217b, 217c sowie ein zweiten und drittes auslaßseitiges Koppelelement 218b, 218c. Mittels solcher, beispielsweise plattenförmig ausgebildeter, Koppelelemente 217a, 217b, 217c, 218a, 218b, 218c werden herkömmlicherweise zum einen, sei es durch deren Dimensionierung und/oder deren Positionierung auf den beiden Aufnehmer-Rohren 4, 5, mechanische Eigenfrequenzen der beiden Aufnehmer-Rohre 4, 5 gezielt beeinflußt. Zum anderen können so auch allfällig oder zumindest potentiell von den vibrierenden Aufnehmer-Rohren einlaßseitig oder auslaßseitig auch im Aufnehmer-Gehäuse verursachte mechanische Spannungen und/oder Vibrationen minimiert werden.

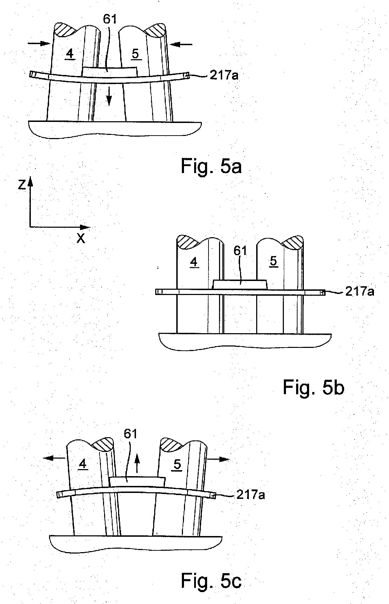

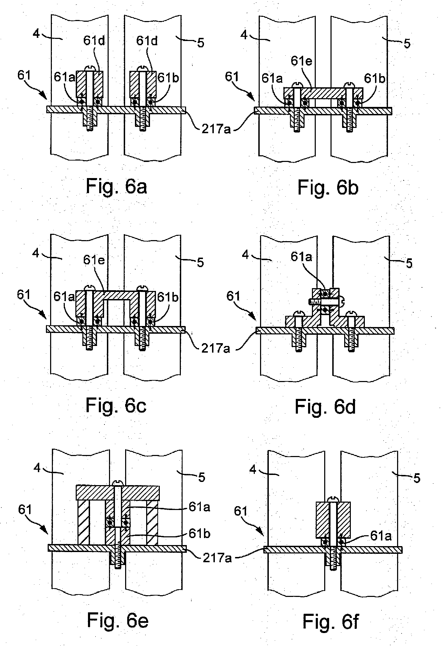

Aufgrund ihrer Verbindung mit den beiden Aufnehmer-Rohren 4, 5 ist sowohl das erste einlaßseitige Koppelelements 217a als auch das erste auslaßseitige Koppelelement 218a im Betrieb wiederholt Verformungen unterworfen, die mit Vibrationen wenigstens eines der beiden Aufnehmer-Rohre 4, 5 korrespondieren. Die Verformungen der Koppelelemente können dabei beispielsweise die in den Fign. 5a - c anhand des ersten Kopplungselements 217a demonstrierten Ausprägungen annehmen. Wie dargestellt, sind die Verformungen, denen zumindest jedes der innersten zwei Koppelelemente 217a, 218a im Betrieb wiederholt, unterworfen ist, zumindest anteilig derart ausgebildet, daß damit korrespondierende Schwingungsbewegungen des jeweiligen Koppelelements zumindest anteilig quer zu einer Schwingungsrichtung der beiden vibrierenden Aufnehmer-Rohre 4, 5 ausgerichtet sind. Bei dem Meßaufnehmer des Ausführungsbeispiel verlaufen die Schwingungsbewegungen der Aufnehmer-Rohre 4, 5 im wesentlichen in X-Richtung, während die vorgenannten Schwingungsbewegungen der Koppelelemente im besonderen auch eine dazu quer verlaufende Komponente in Z-Richtung ausweisen. Bei den Verformungen, denen jedes der Koppelelemente wiederholt unterworfen ist, handelt es sich, wie ohne weiteres erkennbar, im wesentlichen um querkraftfreie Verbiegungen.
Es hat sich nun mehr gezeigt, daß die vorbeschriebenen Verformungen zumindest der Koppelelemente 217a, 217b so ausgeprägt sind, daß ohne weiteres anhand dieser Verformungsbewegungen auch die Schwingungsbewegungen der Aufnehmer-Rohre selbst sehr robust und gut reproduzierbar detektierbar sind. Umgekehrt ist aber auch möglich, zumindest über die Koppelelemente 217a, 217b die Aufnehmer-Rohre in der oben beschrieben Weise auszulenken und somit auch die erwähnten Biege- oder Auslegerschwingungen anzuregen. Beim erfindungsgemäßen Meßaufnehmer ist daher ferner wenigstens ein erstes Wandlerelement 61 vorgesehen, das mit wenigstens einem der vorgenannten Koppelelemente 217a, 217b, 217c, 218a, 218b, 218c, beispielsweise dem Koppelelement 217a, zumindest mittelbar mechanisch gekoppelt ist.
Das wenigstens eine Wandlerelement 61 kann nunmehr dazu dienen, elektrischer Energie in mechanische umzuwandeln. Dafür sind Koppelelement 217a und Wandlerelement 61 so miteinander mechanisch gekoppelt - beispielsweise im wesentlichen starr miteinander verbunden - , daß auch das Wandlerelement 61 zumindest anteilig Schwingungsbewegungen ausführt, die mit den wiederkehrenden Verformungen zumindest dieses Koppelelements 217a und insoweit auch mit denen der Aufnehmer-Rohre 4, 5 korrespondieren. Nach einer Ausgestaltung der Erfindung ist das erste Wandlerelement 61 so mit dem einen der wenigstens zwei Koppelelemente 217a, 218a gekoppelt, daß das Wandlerelement 61 zumindest anteilig Schwingungsbewegungen ausführt, die im wesentlichen phasengleich mit Verformungsbewegungen eines sich zwischen den beiden Aufnehmer-Rohren 4, 5 befindenden Abschnitts desselben Koppelelements einhergehen. Dafür ist das Wandlerelement 61 mit diesem sich zwischen den beiden Aufnehmer-Rohren 4, 5 befindenden Abschnitt des Koppelelements in vorteilhafter Weise im wesentlichen starr verbunden.
Gemäß der Erfindung ist das Wandlerelement 61 dafür vorgesehen, zumindest zeitweise Schwingungen der Aufnehmer-Rohre 4, 5 anzuregen. In Ergänzung dazu ist das Wandlerelement gemäß einer weiteren Ausgestaltung der Erfindung dafür vorgesehen, zumindest zeitweise Schwingungen der Aufnehmer-Rohre 4, 5 zu erfassen. Zur Verbesserung des Wirkungsgrades des Wandlerelements 61 und/oder zum direkten differentiellen Erfassen und/oder Anregen von örtlich verschiedenen Schwingungen sind nach einer weiteren Ausgestaltung der Erfindung das Wandlerelement und zwei der Koppelelemente 217a, 217b, insb. zwei benachbarte Koppelelemente, zumindest mittelbar miteinander mechanisch gekoppelt.
Gemäß der Erfindung weist das Wandlerelement 61 wenigstens einen zumindest anteilig aus piezoelektrischem Material bestehenden Verformungskörper 61a auf. Anstelle eines einzigen Verformungskörpers 61a der in Rede stehenden Art können, falls erforderlich, aber auch zwei oder mehrere solcher Verformungskörper 61a, 61b aus piezoelektrischem Material jeweils für die Realisierung einzelner Wandlerelemente verwendet werden. Verschiedene Varianten für die Realisierung eines solchen Wandlerelements mit wenigstens einem zumindest anteilig aus piezoelektrischem Material bestehenden Verformungskörper sind beispielhaft in den Fig. 6a - f dargestellt.
Gemäß den in den Fig. 6a - f gezeigten Ausführungsbeispielen kann das Wandlerelement so ausgestaltet werden, das es wenigstens einen solchen aus piezoelektrischem Material bestehenden Verformungskörper 61 aufweist, der, wie in Fig. 6d oder e gezeigt, in eine auf das erste Koppelelement 217a aufgesetzte und/oder in dieses eingearbeitete Klemmvorrichtung eingespannt ist. Für diese Ausgestaltung würde, ggf. auch die Verwendung lediglich eines einzigen Verformungskörpers
ausreichend sein. Demgegenüber sind bei den in den Fig. 6a, b und c gezeigten Ausführungsbeispielen jeweils mindest zwei Verformungskörper 61a, 61b vorgesehen. In Fig. 6a ist jeder der beiden Verformungskörper 61a, 61b des Wandlerelements sowohl mit dem zugehörigen Koppelelement als auch auf einer vom Koppelelement 217a abgewandten Seite mit einem eigenen, als seismische Masse wirkenden Fixierblock 61c, 61d verbunden, während in Fig. 6b und c die beiden auf das Koppelelement 217a entsprechend aufgesetzten Verformungskörper 61a, 61b auf einer vom Koppelelement abgewandten Seite jeweils mittels eines weitgehend biegesteifen Verbindungsstücks 61e im wesentlichen starr miteinander verbunden sind. Das Verbindungsstück 61e kann, wie in Fig. 6b schematisch dargestellt, beispielsweise balken- oder scheibenförmig geformt sein. Es kann aber beispielsweise auch, wie in Fig. 6c angedeutet, als ein brückenförmiges Verbindungsstück ausgebildet sein. Es sei an dieser Stelle noch erwähnt, daß das Wandlerelement 61, obwohl es in den Fign. 2 und 3 wie auch den Fign. 6a - 6f stets außerhalb eines zwischen den beiden Aufnehmer-Rohren gebildeten Zwischenraums und somit auch von einer von einer beide Aufnehmer-Rohre 4,5 imaginär schneidenden Rohrebene beabstandet gezeigt worden ist, falls erforderlich auch zwischen den beiden Aufnehmer-Rohren 4, 5 plaziert werden kann, sofern diese voneinander einen dafür hinreichend großen Abstand aufweisen.

Zum Fixieren des jeweiligen Verformungskörpers 61a, 61b und des jeweils zugehörigen Fixierblocks 61c, 61d bzw. des zugehörigen Verbindungsstücks 61e am Koppelelement 217a können je nach Wahl der Materialpaarungen beispielsweise Lötverbindung, Klebeverbindungen dienen. Alternativ oder in Ergänzung dazu können, wie in den Fign. 6a - f schematisch dargestellt, mittels entsprechend am jeweiligen Koppelelement fixierter - hier im wesentlichen senkrecht darauf stehender, zentraler - Bolzen realisierte Schraubverbindungen dienen. Mittels einer endseits auf den Bolzen entsprechend aufgeschraubten und somit als Widerlager für den Verformungskörper 61a wirkenden Spannschraube kann eine entsprechende, insb. auch mit Temperaturschwankungen einhergehende unterschiedliche Längenausdehnungen von Verformungskörper, Koppelelement und Bolzen ausgleichende, Vorspannung erzeugt werden, so daß das Wandlerelement 61 in der Lage ist Schwingungsbewegungen beidseits einer statischen Ruhelage zu generieren und/oder zu detektieren. Falls erforderlich können die beiden Verformungskörper 61a, 61b und das endseits jeweils daran fixierte Verbindungsstück bzw. der endseits jeweils daran fixierte Fixierblock 61c, 61d aber auch als ein im wesentlichen homogenes einstückiges Formstück realisiert sein.

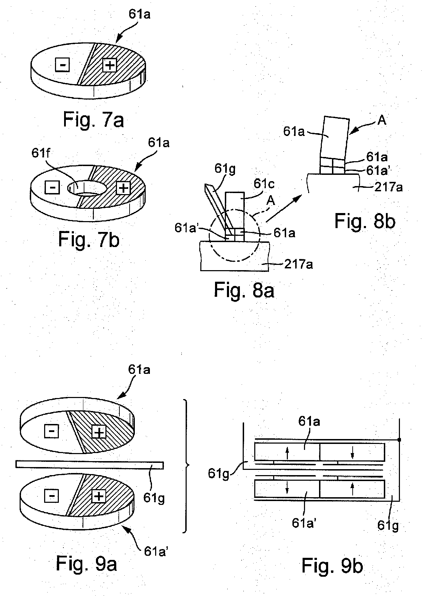

In den Fig. 7a und b sind beispielhaft Ausführungsbeispiele für den prinzipiellen Aufbau eines piezo-elektrischen Verformungskörpers der beschriebenen Art dargestellt. Der hier gezeigte Verformungskörper 61a ist hierbei als eine mittels zweier aneinander grenzender Segmente gebildete - hier kreisförmige - Scheibe dargestellt, wobei die Segmente einander entgegengesetzte Polarisationen aufweisen (hier symbolisiert durch "+" und "-"). Für das Hindurchführen von dem Fixieren des Verformungskörpers dienenden Bauteilen und/oder dem elektrischen Anschließen der Segmente dienenden Leitungen ist bei in Fig. 7b gezeigten Verformungskörper 61a eine entsprechende Bohrung vorgesehen; es ist hierbei aber auch möglich, zwei oder mehrere entsprechende Bohrungen in den Verformungskörper einzuarbeiten.

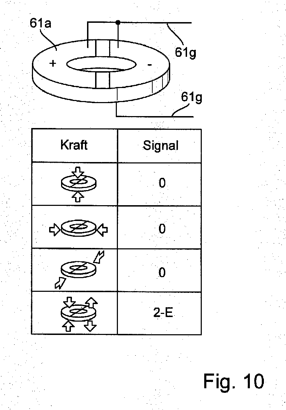

In den Fig. 8a und b ist dargestellt, wie beispielsweise ein mittels zweier piezoelektrischer Verformungskörper 61a, 61a' der vorgenannten Art gebildeter Stapel einen endseits daran fixiertes Formstück, beispielsweise den erwähnten Fixierblock 61c oder das erwähnte Verbindungsstück 61e, direkt zu Kippschwingungen anregt. Der vergrößerte Ausschnitt A (Fig. 8b) zeigt den Bereich um den Stapel. Wird eine elektrische Wechselspannung an die elektrisch leitfähigen Kontaktelektroden 61g angelegt (die Kontaktelektroden sind in dem vergrößerten Ausschnitt nicht dargestellt), so ist der das Wandlerelement 61a bildende Stapel an der einen oder der anderen Seite Kontraktionen unterworfen, während an der dem jeweils gegenüberliegenden Seite des Stapels Dehnungen zu verzeichnen sind. Infolgedessen wird mittels des Stapels eine alternierende Kippbewegung direkt auf das endseits fixierte Formstück 61c bzw. 61f übertragen und dort, je nach Einspannsituation in eine Auslegerschwingung oder eine Biegeschwingung transformiert. Im vorliegenden Beispiel wird die Kippbewegung in einer Ebene ausgeführt, die senkrecht auf der Verbindungsebene von Stapel und Formstück steht. Umgekehrt können durch via Koppelelement 217a in den das Wandlerelement 61a bildenden Stapel eingetragene Schwingungen entsprechende Wechselspannungen im Stapel induziert werden, die mittels der Kontaktelemente 61e abgreifbar sind. Ein Vorteil eines solchen Stapels 5 liegt darin, dass sich ein aus einzelnen flachen piezo-elektrischen Verformungskörpern gebildeter Stapel preisgünstiger herstellen läßt, als ein einziger piezo-elektrisches Verformungskörper gleicher Höhe. Die Fig. 9a und b zeigen schematisch, wie zwei piezo-elektrische Verformungskörper 61a, 61a' der beschriebenen Art angeordnet und elektrisch kontaktiert sein können, so daß sich ein entsprechender Stapel ergibt, wie er in Fig. 8a dargestellt ist. Die beiden Verformungskörper 61a, 61a' sind hierbei so angeordnet, daß sich, wie angedeutet, Segmente mit jeweils gleicher Polarisation gegenüberliegen. Zum elektrischen Anschließen des insoweit gebildeten Wandlerelements 61 sind mit den einzelnen Segmenten entsprechend galvanisch verbundene, beispielsweise jeweils als Lötfahne ausgeführte, Kontaktelektroden 61g vorgesehen, von denen sich zwei miteinander verbundene an den beiden Außenflächen des Stapels befinden. Eine dritte der elektrisch leitfähigen Kontaktelektroden 61g ist so zwischen den beiden Verformungskörpern angeordnet. Die Kontaktelektroden 61g sind dabei so am Stapel angeordnet und so mit diesem verbunden, daß sie die einzelnen Segmente innerhalb des Stapels praktisch elektrisch anti-parallel geschaltet sind. Die am Wandlerelement 61 vorgesehenen Kontaktelektroden 61g können mit dem jeweiligen Verformungskörper 61a, 61a' z.B. verkleb, verlötet oder verschweißt sein. In Fig. 10 ist ein weiterer Vorteil eines Wandlerelements der beschriebenen Art veranschaulicht, das mittels in der in Fig. 9a, b gezeigten Weise polarisierten piezo-elektrischen Verformungskörpern 61a, 61a' realisiert ist. Dargestellt ist der aus zwei einzelnen Verformungskörper 61a, 61a' zusammengesetzte Stapel mit zwei Elektroden 61g. Darunter ist der Zusammenhang zwischen in unterschiedlicher Weise auf diesen Verformungskörper einwirkenden Kräften (gekennzeichnet durch die Pfeile) und der zugehörigen Wechselspannung verdeutlicht. Wie sich aus der Zusammenschau ergibt, heben sich symmetrische Kräfte/Bewegungen jeweils gegenseitig in ihrer Wirkung auf und erzeugen somit kein Signal. Lediglich Kippbewegungen der beschriebenen Art auf der Außenseite des piezo-elektrischen Verformungskörpers bewirken aufgrund der einander entgegengesetzter Polarisation der einzelnen Segmente ein elektrisches Signal bzw. setzen ein solches um. Bei der Kippbewegung handelt es sich um eine Bewegung, die sich z.B. in die beiden Kraftkomponenten Druck und Zug zerlegen läßt. Das elektrische Signal ist hier bezeichnet mit 2 ^{∗} E, weil sich durch die Kräfte, die von oben und unten auf den Stapel wirken, ein doppelt so großes elektrisches Potential ergibt wie bei der Kraft durch die Kippbewegung nur auf einer Seite. Neben dem verbesserten Wirkungsgrad ist ein solcher Verformungskörper zudem auch weitgehend unempfindlich gegenüber einer Vielzahl von äußeren Störkräften.

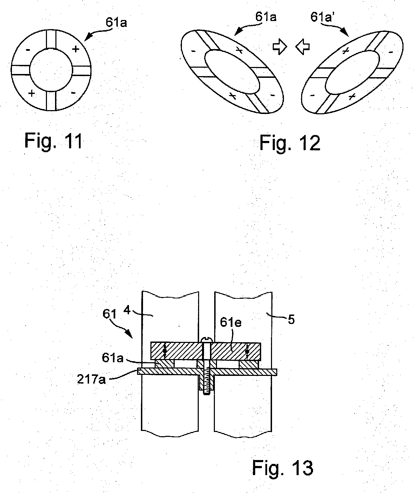

Obgleich bei den in den Fign. 6a - f gezeigten Ausführungsbeispielen jeweils nur Verformungskörper 61a, 61' mit lediglich zwei Segmenten unterschiedlich Polarisation gezeigt sind, kann es bei der praktischen Umsetzung der Erfindung durchaus von Vorteil sein, Wandlerelemente zu verwenden, die mittels zwei oder mehreren Segmenten unterschiedlich Polarisation realisiert sind und wie sie beispielhaft in Fig. 11 bis 13 dargestellt sind. So ist in Fig. 11 in einer Draufsicht auf eine entsprechende Außenfläche ein Ausführungsbeispiel für einen piezo-elektrischen Verformungskörper der beschriebnen Art gezeigt, der vier Segmente aufweist. Die Polarisationen der Segmente und damit einhergehend die damit jeweils zu erzeugenden und/oder zu empfangenden Kraftkomponenten sind, wie schematisch dargestellt, jeweils paarweise identisch, wobei sich die Polarisationen benachbarter Segmente abwechseln.

Eine mögliche Vorgehensweise beim Zusammenfügen zweier solcher piezo-elektrischer Verformungskörper 61a, 61a' zu einem Stapel ist in Fig. 12 gezeigt. Dort liegen - wie schon im Zusammenhang mit den Fign. 8a, b erwähnt - gleichpolarisierte Segmente einander gegenüber. Solch ein mittels vier Segmenten gebildeter Verformungskörper 61a, 61a' eignet sich beispielsweise auch zur Realisierung eines Wandlerelements 61 gemäß den Ausführungsbeispielen von Fig. 6a, 6b, 6c oder 6f mit am Koppelelement 217a jeweils fixierten Bolzen mit Spannschraube. Ein weiteres Beispiel für ein den vorgenannten Stapel entsprechend verwendendes Wandlerelement 61 ist in Fig. 13 schematisch gezeigt. Das mittels des Stapels gebildete Wandlerelement 61 ist wiederum am Koppelelement 217a befestigt. Dies kann in vorteilhafter Weise auch derart realisiert sein, daß das Wandlerelement, wie bereits erwähnt, zwischen den beiden Aufnehmer-Rohren 4, 5 plaziert ist.

Gemäß einer Weiterbildung der Erfindung ist ferner vorgesehen, daß der Meßwandler zusätzlich zum ersten Wandlerelement 61 des weiteren wenigstens ein zweites Wandlerelement 62 zum Umwandeln elektrischer Energie in mechanische und/oder umgekehrt aufweist. In entsprechender Weise sind hierbei auch das zweite Wandlerelement 62 und eines der - hier das am nächsten zur Mitte hin gelegene auslaßseitige - Koppelelemente 218a zumindest mittelbar miteinander mechanisch derart gekoppelt, daß das auch zweite Wandlerelement 62 zumindest anteilig Schwingungsbewegungen ausführt, die mit den wiederkehrenden Verformungen desselben Koppelelements korrespondieren. In vorteilhafter Weise sind dabei die wenigstens zwei Wandlerelemente 61, 62 identisch oder zumindest im wesentlichen baugleich ausgebildet. Gemäß einer weiteren Ausgestaltung dieser Weiterbildung der Erfindung sind das erste Wandlerelement 61 mit wenigstens dem ersten einlaßseitigen Koppelelement 217a und das zweite Wandlerelement 62 mit wenigstens dem ersten auslaßseitigen Koppelelement 218a mechanisch gekoppelt. Somit korrespondieren die dem ersten Wandlerelement 61 eingeprägten Verformungen wie auch die daran angelegten elektrischen Spannungen mit den einlaßseitigen Schwingungsbewegungen der Aufnehmer-Rohre und in entsprechender Weise die dem zweiten Wandlerelement 62 eingeprägten Verformungen wie auch die daran angelegten elektrischen Spannungen mit den auslaßseitigen Schwingungsbewegungen der Aufnehmer-Rohre 4, 5. Zudem sind zumindest bei im wesentlichen identischen und bezüglich der Mitte symmetrisch angeordneten Wandlerelementen 61, 62 deren Empfindlichkeit auf die Verformungsbewegungen und insoweit auf die Schwingungen der Aufnehmer-Rohre sowie auch die Empfindlichkeit auf die entsprechenden Erregersignale im wesentlichen gleich groß.

## Patentansprüche

1. Meßaufnehmer vom Vibrationstyp zum Messen eines in einer Rohrleitung geführten strömungsfähigen Mediums, welcher Meßaufnehmer umfaßt:
wenigstens zwei schwingfähig gehalterte und im Betrieb zumindest zeitweise vibrierende Aufnehmer-Rohre (4, 5) von denen zumindest ein dem Führen wenigstens eines Teilvolumens des zu messenden Mediums dienendes erstes Aufnehmer-Rohr (4, 5) mit der der Rohrleitung kommuniziert, sowie
- wenigstens ein erstes Wandlerelement (61) zum Umwandeln elektrischer Energie in mechanische,
--wobei die beiden Aufnehmer-Rohre (4, 5) mittels wenigstens eines ersten einlaßseitigen Koppelelements und mittels wenigstens eines ersten auslaßseitigen Koppelelement miteinander mechanisch derart gekoppelt sind, daß sowohl das erste einlaßseitige Koppelelements (217a) als auch das erste auslaßseitige Koppelelement (218a) im Betrieb wiederholt Verformungen unterworfen ist, die mit Vibrationen wenigstens eines der beiden Aufnehmer-Rohre (4, 5) korrespondieren,
- wobei das erste Wandlerelement (61) und wenigstens eines der Koppelelemente (217a, 218a) zumindest mittelbar miteinander mechanisch derart gekoppelt, nämlich im wesentlichen starr miteinander verbunden sind, daß das Wandlerelement (61) zumindest anteilig Schwingungsbewegungen ausführt, die mit den wiederkehrenden Verformungen zumindest dieses Koppelelements (217a, 218a) korrespondieren,
- wobei das erste Wandlerelement (61) wenigstens einen zumindest anteilig aus piezoelektrischem Material bestehenden Verformungskörper (61a, 61a') aufweist, der auf das erste Koppelelement (217a) aufgesetzt ist,
- und wobei das erste Wandlerelement (61) zumindest zeitweise als ein Schwingungserreger zum zumindest zeitweisen Erzeugen und/oder Aufrechterhalten mechanischer Schwingungen wenigstens des ersten Aufnehmer-Rohrs (4) dient.

2. Meßaufnehmer gemäß dem vorherigen Anspruch, wobei die Verformungen, denen jedes der wenigstens zwei Koppelelemente (217a, 218a) im Betrieb wiederholt unterworfen ist, zumindest anteilig derart ausgebildet sind, daß damit korrespondierende Schwingungsbewegungen des jeweiligen Koppelelements (217a, 218a) zumindest anteilig quer zu einer Schwingungsrichtung der beiden vibrierenden Aufnehmer-Rohre (4, 5) ausgerichtet sind.

3. Meßaufnehmer gemäß einem der vorherigen Ansprüche, wobei jedes der beiden Koppelelemente als eine jeweils an beiden Aufnehmer-Rohren (4, 5) fixierte Knotenplatte ausgebildet ist.

4. Meßaufnehmer gemäß dem vorherigen Anspruch, wobei die Verformungen, denen jedes der beiden Koppelelemente (217a, 218a) wiederholt unterworfen ist, im wesentlichen querkraftfreie Verbiegungen sind.

5. Meßaufnehmer gemäß einem der vorherigen Ansprüche,
- wobei das erste Wandlerelement (61) derart mit dem einen der wenigstens zwei Koppelelemente (217a, 218a) gekoppelt ist, daß das erste Wandlerelement (61) zumindest anteilig Schwingungsbewegungen ausführt, die im wesentlichen phasengleich mit Verformungsbewegungen eines sich zwischen den beiden Aufnehmer-Rohren (4, 5) befindenden Abschnitts desselben Koppelelements (217a, 218a) einhergehen; und/oder
- wobei das erste Wandlerelement (61) derart mit dem einen der wenigstens zwei Koppelelemente (217a, 218a) gekoppelt ist, daß es mit dessen sich zwischen den beiden Aufnehmer-Rohren (4, 5) befindenden Abschnitt im wesentlichen starr verbunden ist; und/oder
- wobei jedes der beiden Aufnehmer-Rohre (4) jeweils wenigstens ein, insb. im wesentlichen U- oder V-förmig, gebogenes Rohrsegment (41) aufweist; und/oder
- wobei die beiden Aufnehmer-Rohre (4, 5) im wesentlichen identisch ausgebildet sind und/oder im wesentlichen zueinander parallel verlaufen; und/oder
- wobei das erste Wandlerelement zumindest zeitweise als ein Schwingungssensor zum zumindest zeitweisen Erzeugen wenigstens eines Schwingungsmeßsignals (s_{vb}) dient, das zumindest Schwingungen wenigstens eines der Aufnehmer-Rohre (4,5) repräsentiert; und/oder
- wobei das erste Wandlerelement (61) einen mit einem der Koppelelemente (217a, 217b, 218a, 218b) mechanisch gekoppelten Anker aus magnetischem Material sowie eine mit einem anderen der Koppelelemente mechanisch gekoppelten Spule aufweist, wobei Anker und Spule zumindest teilweise von einem Magnetfeld durchsetzt sind.

6. Meßaufnehmer gemäß einem der vorherigen Ansprüche, wobei die beiden Aufnehmer-Rohre (4, 5) weiters mittels wenigstens eines zweiten einlaßseitigen Koppelelements (217b) und mittels wenigstens eines zweiten auslaßseitigen Koppelelements (218b) miteinander mechanisch gekoppelt sind.

7. Meßaufnehmer gemäß dem vorherigen Anspruch, wobei das erste Wandlerelement (61) und zwei der Koppelelemente (217a, 217b, 218a, 218b) zumindest mittelbar miteinander mechanisch gekoppelt sind.

8. Meßaufnehmer gemäß einem der vorherigen Ansprüche, weiters umfassend: ein, insb. im wesentlichen starres und/oder im wesentlichen rohrförmiges, Tragelement (6), wobei wenigstens eines der beiden Aufnehmer-Rohre (4, 5) einlaßseitig und auslaßseitig mit dem Tragelement (6) mechanisch verbunden ist.

9. Meßaufnehmer gemäß der vorherigen Ansprüche, wobei das erste Wandlerelement (61) wenigstens zwei zumindest anteilig aus piezoelektrischem Material bestehende Verformungskörper (61a, 61a') aufweist, die auf das erste Koppelelement (217a) aufgesetzt sind, und die auf einer vom Koppelelement abgewandten Seite mit seismischen Massen (61c, 61d) gekoppelt und/oder mittels eines weitgehend biegesteifen Verbindungsstücks (61e) im wesentlichen starr miteinander verbunden sind.

10. Meßaufnehmer gemäß einem der Ansprüche 1 bis 8, wobei der Verformungskörper in eine auf das erste Koppelelement aufgesetzte und/oder in dieses eingearbeitete Klemmvorrichtung eingespannt ist.

11. Meßaufnehmer gemäß einem der vorherigen Ansprüche, welcher Meßaufnehmer weiters ein das erste und das zweite Aufnehmer-Rohr (4, 5) einlaßseitig miteinander verbindendes erstes Verteilerstück (11) sowie ein das erste und das zweite Aufnehmer-Rohr (4, 5) auslaßseitig miteinander verbindendes zweites Verteilerstück (12) umfaßt.

12. Meßaufnehmer gemäß einem der vorherigen Ansprüche, weiters umfassend wenigstens ein zweites Wandlerelement zum Umwandeln elektrischer Energie in mechanische und/oder umgekehrt, wobei das zweite Wandlerelement und eines der Koppelelemente zumindest mittelbar miteinander mechanisch derart gekoppelt sind, daß das zweite Wandlerelement zumindest anteilig Schwingungsbewegungen ausführt, die mit den wiederkehrenden Verformungen desselben Koppelelements korrespondieren.

13. Meßaufnehmer gemäß dem vorherigen Anspruch, wobei das erste Wandlerelement mit wenigstens dem ersten einlaßseitigen Koppelelement und das zweite Wandlerelement mit wenigstens dem ersten auslaßseitigen Koppelelement mechanisch gekoppelt sind.

14. Meßaufnehmer gemäß dem vorherigen Anspruch, wobei das erste Wandlerelement und das zweite Wandlerelement im wesentlichen baugleich ausgebildet sind.

## Claims

1. Vibronic-type sensor designed to measure a flowing medium conducted through a pipe, said sensor comprising:
at least two sensor tubes (4, 5) which are supported in an oscillating manner and vibrate at least intermittently during operation, wherein at least a first sensor tube (4,5) of said tubes that is used to conduct at least a partial volume of the medium to be measured communicates with the pipe, and
- at least a first converter element (61) designed to convert electrical energy into mechanical energy,
-- wherein the two sensor tubes (4, 5) are mechanically coupled with one another by means of at least a first coupling element on the inlet side and at least a first coupling element on the outlet side in such a way that both the first coupling element (217a) on the inlet side and the first coupling element (218a) on the outlet side are repeatedly subjected to deformations during operation, said deformations corresponding to vibrations at least of one of the two sensor tubes (4, 5),
- wherein the first converter element (61) and at least one of the coupling elements (217a, 218a) are at least directly mechanically coupled with one another in such a way, and specifically are essentially rigidly connected to one another, such that the converter element (61) executes, at least in part, vibration movements that correspond to the repeated deformations at least of this coupling element (217a, 218a),
- wherein the first converter element (61) has at least one deformation body (61a, 61a') consisting at least in part of a piezoelectric material, said body being placed on the first coupling element (217a),
- and wherein the first converter element (61) at least temporarily serves as a vibration generator to at least intermittently generate and/or maintain mechanical vibrations at least of the first sensor tube (4).

2. Sensor as claimed in the previous claim, wherein the deformations to which each of the at least two coupling elements (217a, 218a) are repeatedly subjected during operation are at least partially formed in such a way that vibration movements of the coupling element (217a, 218a) corresponding to said deformations are at least partly perpendicular to a direction of vibration of the two vibrating sensor tubes (4, 5).

3. Sensor as claimed in one of the previous claims, wherein each of the two coupling elements is designed as a connection plate fixed in both cases to both sensor tubes (4, 5).

4. Sensor as claimed in the previous claim, wherein the deformations to which each of the two coupling elements (217a, 218a) are repeatedly subjected are essentially free from lateral force.

5. Sensor as claimed in one of the previous claims,
- wherein the first converter element (61) is coupled with one of the at least two coupling elements (217a, 218a) in such a way that the first converter element (61) at least partially executes vibration movements that are essentially in phase with the deformation movements of a section of said coupling element (217a, 218a) that is located between the two sensor tubes (4, 5); and/or
- wherein the first converter element (61) is coupled with one of the at least two coupling elements (217a, 218a) in such a way that it is connected in an essentially rigid manner to the element section that is located between the two sensor tubes (4, 5); and/or
- wherein each of the two sensor tubes (4) has at least one curved tube segment (41), essentially U-shaped or V-shaped; and/or
- wherein the two sensor tubes (4, 5) are essentially identical in design and/or are essentially parallel to one another; and/or
- wherein the first converter element serves at least temporarily as a vibration sensor for the at least temporary generation of at least one vibration measuring signal (S_{vb}), which at least represents vibrations of at least one of the sensor tubes (4, 5); and/or
- wherein the first converter element (61) has an anchor made from a magnetic material that is mechanically coupled with one of the coupling elements (217a, 217b, 218a, 218b), as well as a coil that is mechanically coupled with another one of the coupling elements, wherein a magnetic field at least partially passes through the anchor and the coil.

6. Sensor as claimed in one of the previous claims, wherein the two sensor tubes (4, 5) are further mechanically coupled with one another via at least a second coupling element (217b) on the inlet side and via at least a second coupling element (218b) on the outlet side.

7. Sensor as claimed in the previous claim, wherein the first converter element (61) and two of the coupling elements (217a, 217b, 218a, 218b) are mechanically coupled with one another, at least directly.

8. Sensor as claimed in one of the previous claims, further comprising a support element (6), particularly essentially rigid and/or essentially tubular, wherein at least one of the two sensor tubes (4, 5) is mechanically coupled with the support element (6) on the inlet side and outlet side.

9. Sensor as claimed in the previous claims, wherein the first converter element (61) has at least two deformation bodies (61a, 61a'), made at least partially from a piezoelectric material, said bodies being placed on the first coupling element (217a), and which are coupled with seismic masses (61c, 61d) on a side facing away from the coupling element and/or are connected to one another in an essentially rigid manner via an essentially bend-resistant connection piece (61e).

10. Sensor as claimed in one of the Claims 1 to 8, wherein the deformation body is clamped in a clamping unit that is fitted on the first coupling element and/or integrated into said first coupling element.

11. Sensor as claimed in one of the previous claims, wherein said sensor further comprises a first manifold (11) that interconnects the first and second sensor tube (4,5) on the inlet side, as well as a second manifold (12) that interconnects the first and second sensor tube (12) on the outlet side.

12. Sensor as claimed in one of the previous claims, further comprising at least a second converter element for the conversion of electrical energy into mechanical energy and/or vice versa, wherein the second converter element and one of the coupling elements are at least mechanically connected with one another directly in such a way that the second converter element at least partially executes vibration movements that correspond to the recurrent deformations of said coupling element.

13. Sensor as claimed in the previous claim, wherein the first converter element is mechanically coupled with at least the first coupling element on the inlet side, and the second converter element is mechanically coupled with at least the first coupling element on the outlet side.

14. Sensor as claimed in the previous claim, wherein the first converter element and the second converter element have an essentially identical design.

## Revendications

1. Capteur du type à vibrations destiné à la mesure d'un produit apte à s'écouler, guidé dans une conduite, lequel capteur comprend :
au moins deux tubes de capteur (4, 5) logés de manière apte à vibrer et vibrant au moins temporairement en fonctionnement, tubes parmi lesquels au moins un premier tube de capteur (4, 5), servant au guidage d'au moins un volume partiel du produit à mesurer, communique avec la conduite, ainsi que
- au moins un premier élément convertisseur (61) destiné à la conversion d'une énergie électrique en énergie mécanique,
-- les deux tubes de capteur (4, 5) étant couplés mécaniquement entre eux au moyen d'au moins un premier élément de couplage côté entrée et au moyen d'au moins un premier élément de couplage côté sortie, de telle sorte qu'à la fois le premier élément de couplage (217a) côté entrée et le premier élément de couplage (218a) côté sortie sont soumis de façon répétée, en fonctionnement, à des déformations qui correspondent avec les vibrations d'au moins l'un des deux tubes de capteur (4, 5),
- pour lequel le premier élément convertisseur (61) et au moins l'un des éléments de couplage (217a, 218a) sont couplés mécaniquement entre eux, au moins directement, et sont notamment reliés entre eux pour l'essentiel de façon rigide, de telle sorte que l'élément convertisseur (61) exécute au moins partiellement des mouvements de vibration qui correspondent avec les déformations récurrentes d'au moins cet élément de couplage (217a, 218a),
- pour lequel le premier élément convertisseur (61) comporte au moins un corps de déformation (61a, 61a') constitué au moins partiellement d'un matériau piézoélectrique, lequel corps est placé sur le premier élément de couplage (217a),
- et pour lequel le premier élément convertisseur (61) sert au moins temporairement d'excitateur de vibrations pour la génération et/ou le maintien des vibrations mécaniques, au minimum temporaires, au moins du premier tube de capteur (4).

2. Capteur selon la revendication précédente, pour lequel les déformations, auxquelles chacun des au moins deux éléments de couplage (217a, 218a) est soumis de façon répétée, en fonctionnement, sont conçues au moins partiellement de telle sorte que les mouvements de vibration correspondant à ces déformations de l'élément de couplage (217a, 218a) respectif sont orientées au moins partiellement perpendiculairement à une direction de vibration des deux tubes de capteur (4, 5) vibrants.

3. Capteur selon l'une des revendications précédentes, pour lequel chacun des deux éléments de couplage est conçu en tant que plaque de jonction fixée respectivement aux deux tubes de capteur (4, 5).

4. Capteur selon la revendication précédente, pour lequel les déformations, auxquelles chacun des deux éléments de couplage (217a, 218a) est soumis de façon répétée, sont pour l'essentiel des déformations exemptes de forces transversales.

5. Capteur selon l'une des revendications précédentes,
- pour lequel le premier élément convertisseur (61) est couplé avec l'un des au moins deux éléments de couplage (217a, 218a), de telle sorte que le premier élément convertisseur (61) exécute au moins partiellement des mouvements de vibration, qui sont pour l'essentiel en phase avec les mouvements de déformation d'une partie du même élément de couplage (217a, 218a) se trouvant entre les deux tubes de capteur (4, 5) ; et/ou
- pour lequel le premier élément convertisseur (61) est couplé avec l'un des au moins deux éléments de couplage (217a, 218a) de telle sorte qu'il soit relié, pour l'essentiel de façon rigide, avec sa partie se trouvant entre les deux tubes de capteur (4, 5) ; et/ou
- pour lequel chacun des deux tubes de capteur (4, 5) présente respectivement au moins un segment de tube coudé (41), pour l'essentiel en forme de U ou en forme de V ; et/ou
- pour lequel les deux tubes de capteur (4, 5) sont conçus pour l'essentiel de manière identique et/ou sont pour l'essentiel parallèles l'un par rapport à l'autre ; et/ou
- pour lequel le premier élément convertisseur sert au moins temporairement de capteur de vibrations pour au moins la génération temporaire d'un signal de mesure de vibration (S_{vb}), qui représente au moins les vibrations d'au moins l'un des deux tubes de capteur (4, 5) ; et/ou
- pour lequel le premier élément convertisseur (61) comporte un induit constitué d'un matériau magnétique, couplé mécaniquement avec l'un des éléments de couplage (217a, 217b, 218a, 218b), ainsi qu'une bobine couplée mécaniquement avec l'un des autres éléments de couplage, l'induit et la bobine étant traversés au moins partiellement par un champ magnétique.

6. Capteur selon l'une des revendications précédentes, pour lequel les deux tubes de capteur (4,5) sont en outre couplés mécaniquement entre eux au moyen d'au moins un deuxième élément de couplage (217b) côté entrée et au moyen d'au moins un deuxième élément de couplage (218b) côté sortie.

7. Capteur selon la revendication précédente, pour lequel le premier élément convertisseur (61) et deux des éléments de couplage (217a, 217b, 218a, 218b) sont couplés mécaniquement, au minimum directement, entre eux.

8. Capteur selon l'une des revendications précédentes, comprenant en outre un élément support (6), notamment pour l'essentiel rigide et/ou pour l'essentiel tubulaire, au minimum l'un des deux tubes de capteur (4, 5) étant relié mécaniquement, côté entrée et côté sortie, avec l'élément support (6).

9. Capteur selon les revendications précédentes, pour lequel le premier élément convertisseur (61) présente au moins deux corps de déformation (61a, 61a') constitués au moins partiellement d'un matériau piézoélectrique, lesquels corps sont placés sur le premier élément de couplage (217a), et qui sont couplés sur un côté éloigné de l'élément de couplage avec des masses sismiques (61c, 61d) et/ou reliés entre eux, pour l'essentiel de façon rigide, au moyen d'une pièce de liaison (61e) pour l'essentiel rigide en flexion.

10. Capteur selon l'une des revendications 1 à 8, pour lequel le corps de déformation est serré dans un dispositif de serrage placé sur le premier élément de couplage et/ou intégré dans celui-ci.

11. Capteur selon l'une des revendications précédentes, pour lequel le capteur comprend en outre une première pièce de répartition (11) reliant entre eux, côté entrée, le premier et le deuxième tube de capteur (4, 5), ainsi qu'une deuxième pièce de répartition (12) reliant entre eux, côté sortie, le premier et le deuxième tube de capteur (4, 5).

12. Capteur selon l'une des revendications précédentes, comprenant en outre au moins un deuxième élément convertisseur destiné à la conversion d'une énergie électrique en énergie mécanique, et/ou vice versa, le deuxième élément convertisseur et l'un des éléments de couplage étant couplés au moins directement et mécaniquement entre eux, de telle sorte que le deuxième élément convertisseur exécute au moins partiellement des mouvements de vibration qui correspondent aux déformations récurrentes du même élément de couplage.

13. Capteur selon la revendication précédente, pour lequel le premier élément convertisseur est couplé mécaniquement avec au moins le premier élément de couplage côté entrée, et le deuxième élément convertisseur est couplé mécaniquement avec au moins le premier élément de couplage côté sortie.

14. Capteur selon la revendication précédente, pour lequel le premier élément convertisseur et le deuxième élément convertisseur sont pour l'essentiel de conception identique.
